# EUROPÄISCHE PATENTSCHRIFT

(11) **EP 1 418 379 B1**
(45) Veröffentlichungstag und Bekanntmachung des Hinweises auf die Patenterteilung: **13.09.2006**
(21) Anmeldenummer: 03025175.5
(22) Anmeldetag: 04.11.2003
(51) Int. Cl.: F16N 25/04, F16N 11/08, F16N 25/02

(54) **Vorrichtung zur Versorgung mehrerer Schmierstellen an Maschinenteilen mit Schmierstoff**
Device for feeding lubricant to points to be lubricated on a machine
Dispositif pour alimenter en huile plusieurs points dans une machine

(30) Priorität: 09.11.2002 DE 20217308 U
(43) Veröffentlichungstag der Anmeldung: 12.05.2004
(73) Patentinhaber: Perma-Tec GmbH & Co. KG, 97717 Euerdorf (DE)
(72) Erfinder: Weigand, Michael Dr., 97725 Elfershausen (DE)
(74) Vertreter: Albrecht, Rainer Harald

(56) Entgegenhaltungen:
- DE-U1- 29 815 971
- GB-A- 794 537
- US-A1- 2002 144 864

## Beschreibung

Die Erfindung betrifft eine Vorrichtung zur Versorgung mehrerer Schmierstellen an Maschinenteilen mit Schmierstoff bestehend aus
einem elektromechanischen Schmierstoffspender mit einer elektrischen Steuerung und
einer an einen Schmierstoffauslass des Schmierstoffspenders angeschlossenen Verteilvorrichtung mit einem Gehäuse, einem um eine vertikale Achse drehbar gelagerten zylindrischen, hohlen Verteilerkörper und einer feststehenden, den Verteilerkörper dichtend umschließenden zylindrischen Verteilerhülse,
wobei der mit einer oberseitigen Öffnung für den Einlass von Schmierstoff versehene Verteilerkörper mindestens zwei umfangsseitige und axial zueinander versetzte Verteilerbohrungen aufweist, denen jeweils eine Öffnungsbohrung in der Verteilerhülse zugeordnet ist, wobei jeder Verteilerbohrung eine Freigabewinkelstellung des Verteilerkörpers zugeordnet ist, in der die Verteilerbohrung mit der ihr zugeordneten Öffnungsbohrung fluchtet und die Öffnungsbohrung für den Auslass von Schmierstoff freigibt.

Eine Vorrichtung mit den eingangs beschriebenen Merkmalen ist aus DE 298 15 971 U1 bekannt. Bei der bekannten Vorrichtung ist der Schmierstoffspender mit einem elektromotorischen Antrieb ausgerüstet, der Schmierstoff fördert und gleichzeitig den Verteilerkörper rotierend antreibt. Während des Spendevorgangs führt der Verteilerkörper eine langsame, kontinuierliche Drehbewegung aus. Da sich hierbei die Überdeckung der Verteilerbohrungen mit den Öffnungsbohrungen ändert, treten Druckschwankungen auf, die sich nachteilig auf die Genauigkeit, mit der der Schmierstoff abgegeben wird, auswirken. Ferner ist es bei der bekannten Anordnung nicht möglich, die Zahl der Schmierstellen betriebsmäßig zu variieren.

Der Erfindung liegt die Aufgabe zugrunde, eine Vorrichtung mit den eingangs beschriebenen Merkmalen anzugeben, die eine flexible und präzise Schmierstoffversorgung der an die Vorrichtung angeschlossenen Schmierstellen gewährleistet.

Erfindungsgemäß wird die Aufgabe dadurch gelöst, dass die Verteilervorrichtung einen elektromotorischen Antrieb zur Veränderung der Winkelstellung des Verteilerkörpers aufweist, der von der elektronischen Steuerung des Schmierstoffspenders ansteuerbar ist, und dass der elektromotorische Antrieb mit einer Laufwegesteuerung ausgerüstet ist, die einen elektromechanischen oder berührungslos arbeitenden Schalter aufweist und die Drehbewegung des Verteilerkörpers in variabel festlegbaren Freigabewinkelstellungen stoppt. Dies erlaubt eine flexible und gleichzeitig präzise Versorgung der Schmierstellen mit Schmierstoff, da die Drehbewegung des Verteilerkörpers durch den separaten elektromotorischen Antrieb vollständig von Schmierstoffabgaben des Schmierstoffspenders entkoppelt ist.

Vorzugsweise sind an dem Verteilerkörper Positionsstifte lösbar befestigt, die als Schaltelemente den Freigabewinkelstellungen zugeordnet sind und mit dem Schalter zusammenwirken. Dies erlaubt eine elektromechanische Erfassung der Freigabewinkelstellungen. Eine berührungslose Erfassung der Freigabewinkelstellungen, z. B. durch induktive Näherungsschalter, lichtempfindliche Sensoren u. dgl. ist jedoch im Rahmen der Erfindung nicht ausgeschlossen.

Vorzugsweise erhält der elektromotorische Antrieb der Verteilvorrichtung von der elektronischen Steuerung des Schmierstoffspenders einen die Drehbewegung des Verteilerkörpers auslösenden Steuerungsimpuls, nachdem eine durch die elektronische Steuerung vorgegebene Schmierstoffmenge abgegeben worden ist und bevor der Schmierstoffspender von der elektronischen Steuerung einen neuen Spenderimpuls erhält. Dies hat den Vorteil, dass die Schmierstoffabgabe und die Drehbewegung des Verteilerkörpers nicht gleichzeitig erfolgen, sondern sequentiell nacheinander stattfinden. Die Abgabe von Schmierstoff erfolgt daher nur dann, wenn eine der Verteilerbohrungen mit der ihr zugeordneten Öffnungsbohrung fluchtet und die Öffnungsbohrung dabei vollständig freigibt. Während der Schmierstoffabgabe liegt somit zwischen den beiden Bohrungen keine teilweise Überdeckung vor, die eine deutliche Erhöhung des Druckverlustes in der Verteilvorrichtung hervorruft. Hierdurch kann die abzugebende Schmierstoffmenge sehr genau dosiert werden.

Die Verteilvorrichtung kann eine Einrichtung zur Erkennung der Freigabewinkelstellungen aufweisen, welche den Freigabewinkelstellungen zugeordnete unterschiedliche Signale abgibt. Vorzugsweise ist der Verteilerkörper mit einer Codierung versehen, die einen Drehwinkelreferenzwert definiert, wobei zur Erfassung der Codierung ein Sensor vorgesehen ist, dessen Signalwert der elektronischen Steuerung des Schmierstoffspenders zugeführt wird. Hierdurch erkennt die elektronische Steuerung des Schmierstoffspenders jederzeit, welche Freigabewinkelstellung vorliegt Der elektromotorische Antrieb kann eine Einrichtung zur Erfassung des auf den Drehwinkelreferenzwert zurückbezogenen Drehwinkels aufweisen, wobei die Messwerte der elektronischen Steuerung des Schmierstoffspenders zur weiteren Signalverarbeitung zuführbar sind.

Die Öffnungsbohrungen können auf einer vertikalen Achse gereiht oder zueinander winkelversetzt angeordnet sein. Ferner weisen die Öffnungsbohrungen abgabeseitig jeweils einen Anschluss für eine Schmiermittelleitung zur Versorgung einer Schmierstelle auf.

Im Folgenden wird die Erfindung anhand einer lediglich ein Ausführungsbeispiel darstellenden Zeichnung ausführlich erläutert.

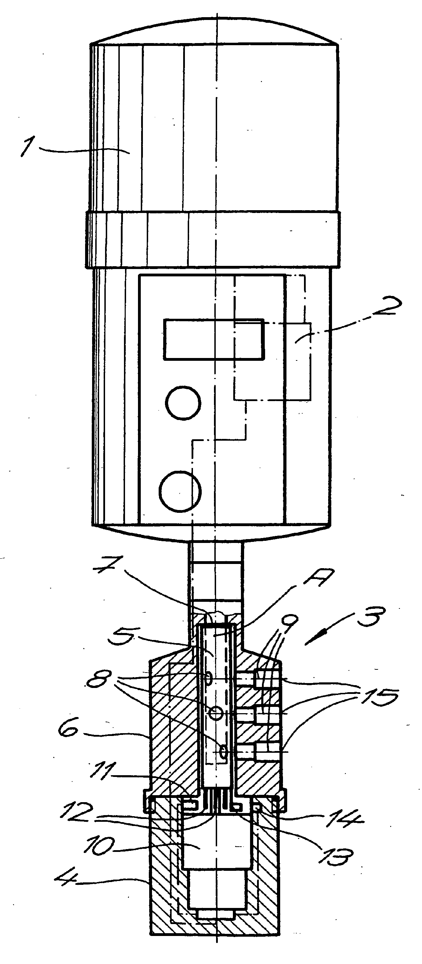

Die einzige Figur zeigt eine erfindungsgemäße Vorrichtung zur Versorgung mehrerer Schmierstellen an Maschinenteilen mit Schmierstoff. Die Vorrichtung besteht aus einem elektromechanischen Schmierstoffspender 1 mit einer elektrischen Steuerung 2 und einer an einen Schmierstoffauslass des Schmierstoffspenders 1 angeschlossenen Verteilvorrichtung 3. Die Verteilvorrichtung 3 weist ein Gehäuse 4, einen um eine vertikale Achse A drehbar gelagerten zylindrischen, hohlen Verteilerkörper 5 und eine feststehende, den Verteilerkörper 5 dichtend umschließende zylindrische Verteilerhülse 6 auf. Der mit einer oberseitigen Öffnung 7 für den Einlass von Schmierstoff versehene Verteilerkörper 5 enthält mehrere umfangseitige sowie axial zueinander versetzte Verteilerbohrungen 8, denen jeweils eine Öffnungsbohrung 9 in der Verteilerhülse 6 zugeordnet ist. Weiterhin ist jeder Verteilerbohrung 8 eine Freigabewinkelstellung des Verteilerkörpers 5 zugeordnet, in der die Verteilerbohrung 8 mit der ihr zugeordneten Öffnungsbohrung 9 fluchtet und die Öffnungsbohrung 9 für den Auslass von Schmierstoff freigibt. Im vorliegenden Beispiel sind die Verteilerbohrungen 8 und die Öffnungsbohrungen 9 so angeordnet, dass in jeder Freigabewinkelstellung des Verteilerkörpers 5 jeweils nur eine Öffnungsbohrung 9 für den Auslass von Schmierstoff freigegeben ist. Die Verteilvorrichtung 3 weist einen elektromotorischen Antrieb zur Veränderung der Winkelstellung des Verteilerkörpers auf, der von der elektronischen Steuerung 2 des Schmierstoffspenders 1 ansteuerbar ist. Der elektromotorische Antrieb 10 ist mit einer Laufwegesteuerung ausgerüstet, die einen elektromechanisch arbeitenden Schalter 11 aufweist und die Drehbewegung des Verteilerkörpers 5 in variabel festlegbaren Freigabewinkelstellungen stoppt. Der separate Antrieb 10 der Verteilvorrichtung 3 erlaubt eine vollständige Entkoppelung der Drehbewegung des Verteilerkörpers 5 von Schmierstoffabgaben des Schmierstoffspenders 1. Dadurch ist eine sehr flexible und gleichzeitig äußerst präzise Schmierstoffversorgung der an die Vorrichtung angeschlossenen Schmierstellen an Maschinenteilen möglich. Im Ausführungsbeispiel weist die Vorrichtung eine autarke, nicht dargestellte Stromversorgung mittels Batterien auf.

An dem Verteilerkörper 5 sind Positionsstifte 12 lösbar befestigt, die als Schaltelemente den Freigabewinkelstellungen zugeordnet sind und mit dem Schalter 11 zusammenwirken. Eine berührungslose Erfassung der Freigabewinkelstellungen soll jedoch nicht ausgeschlossen sein.

Der elektromotorische Antrieb 10 der Verteilvorrichtung 3 erhält von der elektronischen Steuerung 2 des Schmierstoffspenders 1 einen die Drehbewegung des Verteilerkörpers 5 auslösenden Steuerungsimpuls, nachdem eine durch die elektronische Steuerung vorgegebene Schmierstoffmenge abgegeben worden ist und bevor der Schmierstoffspender 1 von der elektronischen Steuerung 2 einen neuen Spendeimpuls erhält. Dadurch sind Schmierstoffabgaben des Schmierstoffspenders 1 und die Drehbewegung des Verteilerkörpers 5 zeitlich voneinander getrennt. Eine Abgabe von Schmierstoff erfolgt erst dann, wenn die gewünschte Verteilerbohrung 8 mit der ihr zugeordneten Öffnungsbohrung 9 fluchtet und die Öffnungsbohrung 9 für den Auslass von Schmierstoff freigibt. Hierdurch wird eine teilweise Überdeckung der beiden Öffnungen 8, 9 während der Abgabe von Schmierstoff verhindert und kann die abgegebene Schmierstoffmenge sehr genau eingestellt werden. Der Verteilerkörper 5 ist ferner mit einer Codierung 13 versehen, die einen Drehwinkelreferenzwert definiert und im Ausführungsbeispiel in Form eines Codierstiftes dargestellt ist. Zur Erfassung der Codierung 13 ist ein Sensor 14 vorgesehen, dessen Signalwert der elektronischen Steuerung 2 des Schmierstoffspenders 1 zugeführt wird. Dadurch erkennt die elektronische Steuerung 2 des Schmierstoffspenders 1 stets, welche Freigabewinkelstellung vorliegt. Die Öffnungsbohrungen 9 sind auf einer vertikalen Achse A gereiht angeordnet und weisen abgabeseitig jeweils einen Anschluss 15 für eine Schmiermittelleitung zur Versorgung einer Schmierstelle auf.

## Patentansprüche

1. Vorrichtung zur Versorgung mehrerer Schmierstellen an Maschinenteilen mit Schmierstoff bestehend aus
einem elektromechanischen Schmierstoffspender (1) mit einer elektrischen Steuerung (2) und
einer an einen Schmierstoffauslass des Schmierstoffspenders (1) angeschlossenen Verteilvorrichtung (3) mit einem Gehäuse (4), einem um eine vertikale Achse (A) drehbar gelagerten zylindrischen, hohlen Verteilerkörper (5) und einer feststehenden, den Verteilerkörper (5) dichtend umschließenden zylindrischen Verteilerhülse (6),
wobei der mit einer oberseitigen Öffnung (7) für den Einlass von Schmierstoff versehene Verteilerkörper (5) mindestens zwei umfangsseitige und axial zueinander versetzte Verteilerbohrungen (8) aufweist, denen jeweils eine Öffnungsbohrung (9) in der Verteilerhülse (6) zugeordnet ist, wobei jeder Verteilerbohrung (8) eine Freigabewinkelstellung des Verteilerkörpers (5) zugeordnet ist, in der die Verteilerbohrung (8) mit der ihr zugeordneten Öffnungsbohrung (9) fluchtet und die Öffnungsbohrung (9) für den Auslass von Schmierstoff freigibt, **dadurch gekennzeichnet, dass** die Verteilvorrichtung einen elektromotorischen Antrieb (10) zur Veränderung der Winkelstellung des Verteilerkörpers (5) aufweist, der von der elektronischen Steuerung (2) des Schmierstoffspenders (1) ansteuerbar ist, und dass der elektromotorische Antrieb (10) mit einer Laufwegesteuerung ausgerüstet ist, die einen elektromechanischen oder berührungslos arbeitenden Schalter (11) aufweist und die Drehbewegung des Verteilerkörpers (5) in variabel festlegbaren Freigabewinkelstellungen stoppt.

2. Vorrichtung nach Anspruch 1, **dadurch gekennzeichnet, dass** an dem Verteilerkörper (5) Positionsstifte (12) lösbar befestigt sind, die als Schaltelemente den Freigabewinkelstellungen zugeordnet sind und mit dem Schalter (11) zusammenwirken.

3. Vorrichtung nach Anspruch 1 oder 2, **dadurch gekennzeichnet, dass** der elektromotorische Antrieb (10) der Verteilvorrichtung (3) von der elektronischen Steuerung (2) des Schmierstoffspenders (1) einen die Drehbewegung des Verteilerkörpers (5) auslösenden Steuerungsimpuls erhält, nachdem eine durch die elektronische Steuerung (2) vorgegebene Schmierstoffmenge abgegeben worden ist und bevor der Schmierstoffspender (1) von der elektronischen Steuerung (2) einen neuen Spenderimpuls erhält.

4. Vorrichtung nach einem der Ansprüche 1 bis 3, **dadurch gekennzeichnet, dass** die Verteilvorrichtung (3) eine Einrichtung zur Erkennung der Freigabewinkelstellungen aufweist, welche den Freigabewinkelstellungen zugeordnete unterschiedliche Signale abgibt.

5. Vorrichtung nach einem der Ansprüche 1 bis 4, **dadurch gekennzeichnet, dass** der Verteilerkörper mit einer Codierung (13) versehen ist, die einen Drehwinkelreferenzwert definiert, und dass zur Erfassung der Codierung (13) ein Sensor (14) vorgesehen ist, dessen Signalwert der elektronischen Steuerung (2) des Schmierstoffspenders (1) zugeführt wird.

6. Vorrichtung nach Anspruch 5, **dadurch gekennzeichnet, dass** der elektromotorische Antrieb (10) eine Einrichtung zur Erfassung des auf den Drehwinkelreferenzwert zurückbezogenen Drehwinkels aufweist, wobei die Messwerte der elektronischen Steuerung (2) des Schmierstoffspenders (1) zur weiteren Signalverarbeitung zuführbar sind.

## Claims

1. Device for supplying a number of lubrication points on machine parts with lubricant, said device consisting of:
an electromechanical lubricant dispenser (1) with an electric control system (2) and
a distribution device (3) connected to a lubricant outlet of the lubricant dispenser (1), said distribution device comprising a housing (4), a cylindrical hollow distributor body (5) mounted to rotate about a vertical axis (A), and a fixed cylindrical distributor sleeve (6) which surrounds the distributor body (5) in a sealing manner,
wherein the distributor body (5) which is provided with a top opening (7) for the inlet of lubricant comprises at least two distributor bores (8) disposed on its circumference and offset axially from one another, each of said distributor bores being assigned an opening bore (9) in the distributor sleeve (6), wherein each distributor bore (8) is assigned a release angle position of the distributor body (5), in which the distributor bore (8) is aligned with the associated opening bore (9) and releases the opening bore (9) for the outlet of lubricant, **characterized in that** the distribution device has an electric motor drive (10) for changing the angular position of the distributor body (5), which electric motor drive can be controlled by the electronic control system (2) of the lubricant dispenser (1), and **in that** the electric motor drive (10) is equipped with a running path control which has an electromechanical or contactless switch (11) and stops the rotational movement of the distributor body (5) in release angle positions which can be defined in a variable manner.

2. Device according to Claim 1, **characterized in that** position pins (12) are releasably attached to the distributor body (5), which position pins are assigned to the release angle positions as switch elements and cooperate with the switch (11).

3. Device according to Claim 1 or 2, **characterized in that** the electric motor drive (10) of the distribution device (3) receives from the electronic control system (2) of the lubricant dispenser (1) a control pulse which triggers the rotational movement of the distributor body (5), after an amount of lubricant predetermined by the electronic control system (2) has been discharged and before the lubricant dispenser (1) receives a new dispensing pulse from the electronic control system (2).

4. Device according to any of Claims 1 to 3, **characterized in that** the distribution device (3) has a unit for detecting the release angle positions, which unit outputs different signals assigned to the release angle positions.

5. Device according to any of Claims 1 to 4, **characterized in that** the distributor body is provided with a coding (13) which defines a rotation angle reference value, and **in that** a sensor (14) is provided for detecting the coding (13), the signal value of which sensor is fed to the electronic control system (2) of the lubricant dispenser (1).

6. Device according to Claim 5, **characterized in that** the electric motor drive (10) has a unit for detecting the rotation angle referred back to the rotation angle reference value, wherein the measured values can be fed to the electronic control system (2) of the lubricant dispenser (1) for further signal processing.

## Revendications

1. Dispositif d'alimentation en lubrifiant de plusieurs points de lubrification sur des éléments de machines, constitué
- d'un distributeur de lubrifiant électromécanique (1) avec une commande électrique (2) et
- d'un dispositif répartiteur (3) raccordé à une sortie de lubrifiant du distributeur de lubrifiant (1), comprenant un carter (4), un corps répartiteur creux cylindrique (5) monté tournant autour d'un axe vertical (A) et un manchon répartiteur cylindrique (6) stationnaire, qui entoure hermétiquement le corps répartiteur (5),
dans lequel le corps répartiteur (5) muni d'une ouverture (7) côté supérieur pour l'admission de lubrifiant comporte au moins deux trous de répartition (8) côté périphérique et en déport axial mutuel, auxquels est respectivement associé un trou d'ouverture (9) dans le manchon répartiteur (6), dans lequel une position angulaire de dégagement du corps répartiteur (5) est associée à chaque trou de répartition (8), position dans laquelle le trou de répartition (8) s'aligne sur le trou d'ouverture (9) qui lui est associé et dégage le trou d'ouverture (9) pour la sortie de lubrifiant, **caractérisé en ce que** le dispositif répartiteur comporte un entraînement par moteur électrique (10) pour modifier la position angulaire du corps répartiteur (5), lequel entraînement peut être attaqué par la commande électronique (2) du distributeur de lubrifiant (1), et **en ce que** l'entraînement par moteur électrique (10) est équipé d'une commande de parcours de rotation qui comporte un interrupteur (11) électromécanique ou sans contact et stoppe le mouvement de rotation du corps répartiteur (5) dans des positions angulaires de dégagement définissables de façon variable.

2. Dispositif suivant la revendication 1, **caractérisé en ce que** des goupilles de positionnement (12), qui sont associées aux positions angulaires de dégagement en tant qu'éléments de commutation et coopèrent avec l'interrupteur (11), sont fixées de façon amovible sur le corps répartiteur (5).

3. Dispositif suivant la revendication 1 ou 2, **caractérisé en ce que** l'entraînement par moteur électrique (10) du dispositif répartiteur (3) reçoit de la commande électronique (2) du distributeur de lubrifiant (1) une impulsion de commande déclenchant le mouvement de rotation du corps répartiteur (5), après qu'une quantité de lubrifiant prédéfinie par la commande électronique (2) ait été distribuée et avant que le distributeur de lubrifiant (1) reçoive de la commande électronique (2) une nouvelle impulsion de distribution.

4. Dispositif suivant l'une quelconque des revendications 1 à 3, **caractérisé en ce que** le dispositif répartiteur (3) comporte un dispositif d'identification des positions angulaires de dégagement, qui émet des signaux différents associés aux positions angulaires de dégagement.

5. Dispositif suivant l'une quelconque des revendications 1 à 4, **caractérisé en ce que** le corps répartiteur est muni d'un codage (13) qui définit une valeur de référence d'angle de rotation, et **en ce qu'**il est prévu un capteur (14) pour détecter le codage (13), dont la valeur de signal est transmise à la commande électronique (2) du distributeur de lubrifiant (1).

6. Dispositif suivant la revendication 5, **caractérisé en ce que** l'entraînement par moteur électrique (10) comporte un dispositif de détection de l'angle de rotation rapporté à la valeur de référence d'angle de rotation, les valeurs de mesure de la commande électronique (2) du distributeur de lubrifiant (1) pouvant être transmises à un traitement ultérieur des signaux.
